# FASCICULE DE BREVET EUROPEEN

(11) **EP 3 867 060 B1**
(45) Date de publication et mention de la délivrance du brevet: **06.12.2023**
(21) Numéro de dépôt: 19808633.2
(22) Date de dépôt: 17.10.2019
(51) Int. Cl.: B32B 17/10, C03C 17/36, E06B 3/67

(54) **VITRAGE COMPRENANT UN REVÊTEMENT FONCTIONNEL ET UN REVÊTEMENT ABSORBANT D'AJUSTEMENT COLORIMÉTRIQUE**
VERGLASUNG MIT EINER FUNKTIONELLEN BESCHICHTUNG UND EINER ABSORBIERENDEN BESCHICHTUNG MIT KOLORIMETRISCHER EINSTELLUNG
GLAZING COMPRISING A FUNCTIONAL COATING AND AN ABSORBING COATING HAVING A COLORIMETRIC ADJUSTMENT

(30) Priorité: 18.10.2018 FR 1859655
(43) Date de publication de la demande: 25.08.2021
(73) Titulaire: Saint-Gobain Glass France, 92400 Courbevoie (FR)
(72) Inventeur: ONGARELLO, Tommaso, 92350 Le Plessis-Robinson (FR); DIGUET, Antoine, 75009 Paris (FR); CHERY, Vincent, 75019 Paris (FR); MONMEYRAN, Corentin, 93340 Le Raincy (FR)
(74) Mandataire: Saint-Gobain Recherche
(86) Numéro de dépôt international: PCT/FR2019/052463
(87) Numéro de publication internationale: WO 2020/079375

(56) Documents cités:
- WO-A1-2006/043026
- WO-A1-2014/207171
- FR-A1- 2 858 816
- US-A1- 2014 063 582

## Description

L'invention concerne un matériau comprenant un substrat transparent revêtu d'un revêtement fonctionnel pouvant agir sur le rayonnement solaire et/ou le rayonnement infrarouge. L'invention concerne également les vitrages comprenant ces matériaux ainsi que l'utilisation de tels matériaux pour fabriquer des vitrages d'isolation thermique et/ou de protection solaire.

Dans la suite de la description, le terme « fonctionnel » qualifiant « revêtement fonctionnel » signifie « pouvant agir sur le rayonnement solaire et/ou le rayonnement infrarouge ».

Ces vitrages peuvent être destinés aussi bien à équiper les bâtiments que les véhicules, en vue notamment de :
- diminuer l'effort de climatisation et/ou d'empêcher une surchauffe excessive, vitrages dits « de contrôle solaire » et/ou
- diminuer la quantité d'énergie dissipée vers l'extérieur, vitrages dits « bas émissifs ».

Selon les climats des pays où sont installés ces vitrages, notamment, selon les niveaux d'ensoleillement, les performances en termes de transmission lumineuse et de facteur solaire recherchées peuvent varier. Par conséquent, différentes gammes de vitrage caractérisées par leur niveau de transmission lumineuse sont développées.

Par exemple, dans les pays où les niveaux d'ensoleillement sont élevés, il existe une demande forte de vitrage présentant une transmission lumineuse de l'ordre de 40 % et des valeurs de facteur solaire suffisamment basse. Dans les pays où les niveaux d'ensoleillement sont moins élevés, une transmission lumineuse plus élevée est recherchée.

La sélectivité « S » permet d'évaluer la performance de ces vitrages. Elle correspond au rapport de la transmission lumineuse TLᵥᵢₛ dans le visible du vitrage sur le facteur solaire FS du vitrage (S = TLᵥᵢₛ / FS). Le facteur solaire « FS ou g » correspond au rapport en % entre l'énergie totale entrant dans le local à travers le vitrage et l'énergie solaire incidente.

L'obtention d'une sélectivité élevée ne doit pas se faire au détriment de l'aspect esthétique et en particulier de la couleur. En général, on cherche à obtenir une esthétique la plus neutre possible en réflexion extérieure, intérieure et en transmission.

L'approche traditionnelle pour obtenir à la fois une sélectivité élevée et une excellente neutralité en couleur consiste à développer des revêtements fonctionnels de plus en plus sophistiqués.

Des vitrages sélectifs connus comprennent des substrats transparents revêtus d'un revêtement fonctionnel comprenant un empilement de plusieurs couches fonctionnelles métalliques, chacune disposée entre deux revêtements diélectriques. De tels vitrages permettent d'améliorer la protection solaire tout en conservant une transmission lumineuse élevée. Ces revêtements fonctionnels sont généralement obtenus par une succession de dépôts effectués par pulvérisation cathodique éventuellement assistée par champ magnétique.

De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

Les vitrages sélectifs connus sont en général des doubles vitrages comprenant le revêtement fonctionnel situé en face 2, c'est-à-dire sur le substrat le plus à l'extérieur du bâtiment, sur sa face tournée vers la lame de gaz intercalaire.

L'adaptation de la colorimétrie de ces vitrages est obtenue en jouant sur la nature, les épaisseurs des couches ou revêtements constituant les revêtements fonctionnels.

L'invention concerne spécifiquement des vitrages hautement sélectifs comprenant des revêtements fonctionnels complexes à base d'argent.

En effet, les revêtements fonctionnels à base d'argent sont en général plus performants en terme de sélectivité par rapport aux autres revêtements fonctionnels réfléchissant les infrarouges connus telles que les revêtements comprenant des couches à base d'oxyde conducteur.

En revanche, ces revêtements fonctionnels à base d'argent sont qualifiés de complexe de par le nombre de couche les constituant, de par la nature des matériaux constituant ces couches et de par l'ajustement de l'épaisseur de ces couches.

La complexité des revêtements fonctionnels rend difficile l'obtention conjointe de bonnes performances thermiques et d'un aspect esthétique particulier, par exemple une excellente neutralité en couleur ou l'obtention d'une couleur particulière.

Cette difficulté pour obtenir une excellente neutralité en couleur est encore plus marquée pour les vitrages présentant une transmission lumineuse de l'ordre de 50 % car ils sont intrinsèquement plus colorés que des vitrages présentant une transmission lumineuse plus élevée ou plus faible. En effet, pour des transmissions lumineuses très faibles ou très élevées pour lesquelles la clarté est proche de 0 ou de 100, la perception des couleurs est moins intense. Les couleurs « convergent » vers le noir et le blanc.

Enfin, la complexité de ces revêtements fonctionnels rend également difficile le maintien d'une qualité constante de production pour un revêtement fonctionnel donné. En effet, en multipliant le nombre de couches et de matériaux constituant ces revêtements fonctionnels, il est de plus en plus difficile d'adapter les réglages des conditions de dépôt afin d'obtenir des revêtements fonctionnels de couleur identique provenant de deux lots produits sur le même site de production ou de deux lots produits sur deux sites de production différents.

WO 2006/043026 A1 divulgue un vitrage pour véhicule comprenant un panneau de matériau de vitrage, un revêtement absorbant, qui absorbe les rayonnements de longueur d'onde supérieure à 400 nm sur une première surface du panneau, et un revêtement de faible émissivité (faible tendance à mettre l'énergie reçue du rayonnement) sur la première surface ou une seconde surface du panneau. Une structure avec la séquence revêtement absorbant dans le visible / substrat verrier/ revêtement bas émissif y est décrit, ainsi que des revêtements additionnels qui peuvent être appliqués entre le substrat verrier et chacune des couches absorbante ou basse émission, notamment des couches barrières ou des couches suppressantes de couleur. Le revêtement absorbant peut comprendre a) un métal, alliage métallique ou matériau à base d'alliage métallique, ou b) au moins une couche d'un matériau diélectrique et au moins une couche d'un métal ou alliage métallique. Le revêtement absorbant peut typiquement comprendre une couche métallique ou d'alliage métallique sandwichée entre deux couches diélectriques. Les métaux cités sont le titane, le zirconium, le cuivre, le platine, l'or, le zinc, l'étain, le nickel et le chrome. Le revêtement de faible émissivité peut lui comprendre a) un oxyde transparent conducteur (et facultativement un matériau dopant), ou b) au moins une couche de métal et au moins une couche diélectrique, où le métal peut être sélectionné parmi l'argent, l'or, le cuivre, le nickel et le chrome.

Le but de l'invention est donc de pallier ces inconvénients en mettant au point un vitrage présentant à la fois de bonnes performances thermiques, tout en garantissant l'aspect esthétique recherché.

L'objectif visé par l'invention est donc d'obtenir facilement toute une gamme de vitrage présentant à la fois une sélectivité élevée et un aspect esthétique particulier, par exemple une excellente neutralité en couleur ou l'obtention d'une couleur particulière.

Le demandeur a développé une nouvelle solution permettant d'adapter la colorimétrie des vitrages comprenant des revêtements fonctionnels sans complexifier ces revêtements fonctionnels.

La solution proposée consiste à ajouter un revêtement absorbant d'ajustement colorimétrique qui absorbe le rayonnement solaire dans la partie visible du spectre sur l'une des faces d'un substrat du vitrage, ladite face ne comprenant pas le revêtement fonctionnel.

L'invention concerne un matériau comprenant un ou plusieurs substrats

L'invention concerne un matériau comprenant :
- un ou plusieurs substrats transparents, chaque substrat comprenant deux faces principales dont l'une des faces du substrat est revêtue d'un revêtement fonctionnel pouvant agir sur le rayonnement solaire et/ou le rayonnement infrarouge comprenant au moins une couche fonctionnelle métallique à base d'argent, chacune disposée entre deux revêtements diélectriques, et une face non revêtue du revêtement fonctionnel d'un des substrats comprend un revêtement absorbant d'ajustement colorimétrique comprenant en partant du substrat une couche absorbante qui absorbe le rayonnement solaire dans la partie visible du spectre, et un revêtement diélectrique supérieur.

L'invention concerne également :
- un vitrage comprenant un matériau selon l'invention,
- un vitrage comprenant un matériau selon l'invention monté sur un véhicule ou sur un bâtiment, et
- le procédé de préparation d'un matériau ou d'un vitrage selon l'invention,
- l'utilisation d'un vitrage selon l'invention en tant que vitrage de contrôle solaire et/ou bas émissif pour le bâtiment ou les véhicules,
- un bâtiment, un véhicule ou un dispositif comprenant un vitrage selon l'invention.

De préférence, le revêtement absorbant d'ajustement colorimétrique est un revêtement neutralisant, c'est à dire qu'il confère au matériau ou au vitrage le comprenant des couleurs neutres.

Toutefois, dans certaines applications particulières d'autres couleurs sont parfois recherchées, notamment un aspect bleu-vert, bronze ou argent... La solution de l'invention permet d'obtenir facilement ces différentes couleurs.

La solution de l'invention propose donc d'utiliser des revêtements fonctionnels standards ou existants, c'est à dire non optimisés pour améliorer la colorimétrie, et d'améliorer ou modifier leur esthétique en ajoutant un revêtement absorbant d'ajustement colorimétrique sur une autre face d'un substrat constituant le vitrage.

Cette solution découple l'obtention des performances énergétiques (sélectivité, émissivité, etc.), en grande partie assurée par le revêtement fonctionnel, et l'obtention de l'aspect esthétique, assurée par le revêtement absorbant d'ajustement colorimétrique. Le revêtement absorbant d'ajustement colorimétrique influe sur les performances énergétiques mais dans une moindre mesure.

Le revêtement absorbant d'ajustement colorimétrique a une structure moins complexe en termes de nombre et d'épaisseur de couches que le revêtement fonctionnel. Par conséquent, la solution de l'invention permet donc d'obtenir plus facilement tout un panel de couleur par comparaison aux solutions optimisant les revêtements fonctionnels.

Enfin, la solution de l'invention présente pour avantage supplémentaire, en partant d'un seul et même revêtement fonctionnel de transmission lumineuse élevée, d'obtenir tout une gammes de vitrage de transmission lumineuse plus faible et/ou de couleur variée. Il n'est plus nécessaire de développer pour chaque gamme de transmission lumineuse un revêtement fonctionnel complexe présentant à la fois les performances énergétiques et les propriétés colorimétriques. Il suffit en partant du même revêtement fonctionnel complexe, de sélectionner le revêtement absorbant d'ajustement colorimétrique de structure moins complexe permettant d'obtenir les couleurs voulues.

De préférence, un matériau ou un vitrage selon l'invention est configuré avec le revêtement absorbant d'ajustement colorimétrique positionné en face 1 et le revêtement fonctionnel positionné en face 2.

Cette configuration est particulièrement avantageuse car on évite ainsi, en réflexion extérieure, les doubles réflexions colorées lorsque les revêtements se trouvent sur deux substrats différents.

Le matériau selon l'invention peut être sous forme de vitrage monolithique, feuilleté et/ou multiple, en particulier double vitrage ou triple vitrage.

Un vitrage monolithique comprend un matériau comprenant un substrat transparent. La face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend un matériau et au moins un substrat additionnel, le matériau et le substrat additionnel sont séparés par au moins une lame de gaz intercalaire. Le vitrage réalise une séparation entre un espace extérieur et un espace intérieur.

Un double vitrage, par exemple, comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

Un vitrage feuilleté comprend un matériau et au moins un substrat additionnel, le matériau et le substrat additionnel sont séparés par au moins un intercalaire de feuilletage. Un vitrage feuilleté comporte donc au moins une structure de type matériau / intercalaire de feuilletage / substrat additionnel. Dans le cas d'un vitrage feuilleté, on numérote toutes les faces des matériaux et substrats additionnels et on ne numérote pas les faces des intercalaires de feuilletage. La face 1 est à l'extérieur du bâtiment et constitue donc la paroi extérieure du vitrage, la face 4 est à l'intérieur du bâtiment et constitue donc la paroi intérieure du vitrage, les faces 2 et 3 étant au contact de l'intercalaire de feuilletage.

Un vitrage feuilleté et multiple comprend un matériau et au moins deux substrats additionnels correspondant à un second substrat et un troisième substrat, le matériau et le troisième substrat sont séparés par au moins une lame de gaz intercalaire, et
- le matériau et le second substrat ou
- le second substrat et le troisième substrat,
sont séparés par au moins un intercalaire de feuilletage.

Dans le cas d'un vitrage multiple et/ou feuilleté, le revêtement réfléchissant d'ajustement colorimétrique est de préférence positionné en face 1 et le revêtement fonctionnel pouvant agir sur le rayonnement solaire et/ou le rayonnement infrarouge est positionné en face 2 ou 3.

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction.

De manière conventionnelle, les indices de réfraction sont mesurés à une longueur d'onde de 550 nm.

Les caractéristiques lumineuses sont mesurées selon l'illuminant D65 à 2° perpendiculairement au matériau monté dans un double vitrage (sauf indications contraires) :
- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- a*T et b*T correspondent aux couleurs en transmission a* et b* dans le système L*a*b*,
- a*Rext et b*Rext correspondent aux couleurs en réflexion a* et b* dans le système L*a*b*, observateur côté espace extérieur,
- a*Rint et b*Rint correspondent aux couleurs en réflexion a* et b* dans le système L*a*b*, observateur côté espace intérieur.

Sauf indication contraire, les propriétés colorimétriques telles les valeurs L*, a* et b* et toutes les valeurs et gammes de valeurs des caractéristiques optiques et thermiques telles que la sélectivité, la réflexion lumineuse extérieure ou intérieure, la transmission lumineuse et sont calculées avec :
- des matériaux comprenant un substrat revêtu d'un revêtement fonctionnel montés dans un double vitrage,
- le double vitrage a une configuration : 6-16(Ar-90%)-4, c'est-à-dire une configuration constituée d'un matériau comprenant un substrat de type verre sodo-calcique ordinaire de 4 mm et d'un autre substrat de verre de type verre sodo-calcique de 4 mm, les deux substrats sont séparés par une lame de gaz intercalaire à 90 % d'argon et 10 % d'air d'une épaisseur de 16 mm,
- le revêtement fonctionnel est de préférence positionné en face 2.

Un objectif de l'invention peut être d'obtenir une esthétique exceptionnellement neutre en réflexion extérieure, intérieure et en transmission. De préférence, on privilégie la neutralité en réflexion extérieure. Selon l'invention des teintes neutres en réflexion extérieure, en réflexion intérieure ou en transmission sont définies par :
- des valeurs de a* comprise, par ordre de préférence croissant, entre -5 et +5, entre -4 et +4, entre -3 et +3, entre -2 et +2, entre -1 et +1.
- des valeurs de b* comprise, par ordre de préférence croissant, entre -5 et +5, entre -4 et +4, entre -3 et +3, entre -2 et +2, entre -1 et +1.

Un autre objectif de l'invention peut être d'obtenir des couleurs en réflexion extérieure dans la gamme des bleus ou bleus-verts. Des « couleurs dans le bleu-vert », correspondent à des valeurs négatives pour a* et b* dans le système de mesure de couleur L*a*b*. a* est compris entre -10,0 et 0,0, de préférence entre -5,0 et 0,0 et b* est compris entre -10,0 et 0,0, de préférence entre -5,0 et 0,0.

Les vitrages selon l'invention sont montés sur un bâtiment ou un véhicule.

L'invention concerne donc également :
- un vitrage monté sur un véhicule ou sur un bâtiment, et
- un véhicule ou un bâtiment comprenant un vitrage selon l'invention.

Un vitrage pour le bâtiment délimite en général deux espaces, un espace qualifié d'« extérieur » et un espace qualifié d'« intérieur ». On considère que la lumière solaire entrant dans un bâtiment va de l'extérieur vers l'intérieur.

Le revêtement fonctionnel est soit situé :
- en face 2, c'est-à-dire sur le substrat le plus à l'extérieur du bâtiment; sur sa face tournée vers la lame de gaz intercalaire,
- en face 3, c'est-à-dire sur le substrat le plus à l'intérieur du bâtiment; sur sa face tournée vers la lame de gaz intercalaire.

De préférence, le revêtement absorbant d'ajustement colorimétrique est positionné en face 1 et le revêtement fonctionnel pouvant agir sur le rayonnement solaire et/ou le rayonnement infrarouge est positionné en face 2.

Selon des modes de réalisation avantageux, le matériau de l'invention sous forme d'un double vitrage comprenant le revêtement fonctionnel positionné en face 2 permet d'atteindre notamment les performances suivantes :
- une transmission lumineuse comprise entre 40 et 60 %, et/ou
- des valeurs de a* et b* en réflexion extérieure comprise, par ordre de préférence croissant, entre -5 et +5, entre -4 et +4, entre -3 et +3, entre -2 et +2, entre -1 et +1, et/ou
- des valeurs de a* et b* en réflexion intérieure comprise, par ordre de préférence croissant, entre -5 et +5, entre -4 et +4, entre -3 et +3, entre -2 et +2, entre -1 et +1, et/ou
- des valeurs de a* et b* en transmission comprise, par ordre de préférence croissant, entre -5 et +5, entre -4 et +4, entre -3 et +3, entre -2 et +2, entre -1 et +1.

Un tel double vitrage présente des couleurs neutres.

Selon un autre mode de réalisation avantageux, lorsque le matériau est monté dans un double vitrage avec le revêtement fonctionnel positionné en face 2, le double vitrage présente :
- des valeurs de a* en réflexion extérieure comprise, par ordre de préférence croissant, entre -10 et -3,
- des valeurs de b* en réflexion extérieure comprise, par ordre de préférence croissant, entre -20 et -10.

Un tel double vitrage présente une couleur bleue.

Selon un autre mode de réalisation avantageux, lorsque le matériau est monté dans un double vitrage avec le revêtement fonctionnel positionné en face 2, le double vitrage présente des valeurs de a* et b* en réflexion extérieure comprise entre 5 et 20.

Un tel double vitrage présente une couleur bronze.

Dans une configuration de double vitrage, la présente invention permet d'obtenir une sélectivité S élevée notamment supérieure à 1,6 voire supérieure à 1,7, un facteur solaire (FS), inférieur à 30 %, des couleurs neutres en transmission et en réflexion extérieure et intérieure.

L'invention concerne également :
- le procédé d'obtention d'un matériau ou d'un vitrage selon l'invention,
- l'utilisation d'un vitrage selon l'invention en tant que vitrage de contrôle solaire et/ou bas émissif pour le bâtiment ou les véhicules.

Le revêtement fonctionnel et/ou le revêtement absorbant d'ajustement colorimétrique sont déposés par pulvérisation cathodique assistée par un champ magnétique (procédé magnétron). Selon ce mode de réalisation avantageux, toutes les couches des revêtements sont déposées par pulvérisation cathodique assistée par un champ magnétique.

L'invention concerne également le procédé d'obtention d'un matériau et d'un vitrage selon l'invention, dans lequel on dépose les couches des revêtements par pulvérisation cathodique magnétron.

Les caractéristiques préférées qui figurent dans la suite de la description sont applicables aussi bien au matériau et au vitrage selon l'invention que, le cas échéant, au procédé, à l'utilisation, au bâtiment ou au véhicule selon l'invention.

A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Dans la présente description, sauf autre indication, l'expression « à base de », utilisée pour qualifier un matériau ou une couche quant à ce qu'il ou elle contient, signifie que la fraction massique du constituant qu'il ou elle comprend est d'au moins 50%, en particulier au moins 70%, de préférence au moins 90%.

Afin de déterminer pour un vitrage comprenant un revêtement fonctionnel connu quel revêtement absorbant d'ajustement colorimétrique permet d'obtenir les propriétés recherchées thermique et colorimétrique, il est possible grâce à des simulations numériques d'identifier quels revêtements absorbants d'ajustement colorimétrique peuvent être utilisés.

Sauf mention contraire, les épaisseurs évoquées dans le présent document sans autres précisions sont des épaisseurs physiques, réelles ou géométriques dénommées Ep et sont exprimées en nanomètres (et non pas des épaisseurs optiques). L'épaisseur optique Eo est définie comme l'épaisseur physique de la couche considérée multipliée par son indice de réfraction à la longueur d'onde de 550 nm : Eo = n*Ep. L'indice de réfraction étant une valeur adimensionnelle, on peut considérer que l'unité de l'épaisseur optique est celle choisie pour l'épaisseur physique.

Selon l'invention, un revêtement diélectrique correspond à une séquence de couches comprenant au moins une couche diélectrique. Si un revêtement diélectrique est composé de plusieurs couches diélectriques, l'épaisseur optique du revêtement diélectrique correspond à la somme des épaisseurs optiques des différentes couches diélectriques constituant le revêtement diélectrique.

Selon l'invention, un revêtement absorbant d'ajustement colorimétrique est un revêtement qui modifie la couleur du matériau ou d'un vitrage comprenant un revêtement fonctionnel. L'ajustement colorimétrique est réalisé grâce à l'utilisation d'une couche absorbante.

Selon l'invention, une couche absorbante qui absorbe le rayonnement solaire dans la partie visible du spectre est une couche qui absorbe certaines longueurs d'onde dans le visible. L'indice optique d'une couche absorbante peut être décomposé en une partie réelle et une partie imaginaire. La partie réelle, n, correspond à l'indice de réfraction. La partie imaginaire ou facteur d'atténuation k, est liée à l'absorption de la lumière par la couche.

Par « couche absorbante » au sens de la présente invention, on entend une couche en un matériau présentant un rapport n/k entre 0 et 5 en excluant ces valeurs sur au moins 60%, de préférence au moins 80%, voire 100%, de la plage de longueur d'onde du visible (de 380 nm à 780 nm). 100% signifie que le matériau présente un rapport n/k entre 0 et 5 pour toutes les longueurs d'onde de la plage. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'absorption d'énergie lumineuse dans un revêtement absorbant dépend à la fois de la nature de la couche absorbante, de l'épaisseur et du matériau la constituant, mais également de sa position dans le revêtement. De plus, un matériau absorbant modifie dans une certaine mesure la réflexion. Il est donc possible d'augmenter ou de réduire sélectivement les propriétés d'absorption et de réflexion du vitrage pour certaines longueurs d'ondes. L'adaptation de la couleur du vitrage est réalisée en jouant sur cette absorption et sur cette réflexion.

Selon l'invention :
- la réflexion lumineuse correspond à la réflexion du rayonnement solaire dans la partie visible du spectre,
- la transmission lumineuse correspond à la transmission du rayonnement solaire dans la partie visible du spectre,
- l'absorption lumineuse correspond à l'absorption du rayonnement solaire dans la partie visible du spectre.

Selon l'invention, l'absorption lumineuse due à la couche absorbante, mesurée côté verre en déposant uniquement cette couche absorbante enfermée entre deux couches diélectriques non absorbantes sur du verre clair ordinaire de 4 mm à 6 mm d'épaisseur, est :
- supérieure à 5 %, voire supérieure à 10 % ou
- comprise entre 5 et 65 %, comprise entre 5 et 55 %, comprise entre 10 et 45 %, de préférence comprise entre 10% et 35 %.

La couche absorbante est choisie parmi :
- les couches à base d'un ou plusieurs métaux et/ou métalloïdes,
- les couches de nitrure d'un ou plusieurs métaux et/ou métalloïdes,
- les couches d'oxynitrure d'un ou plusieurs métaux et/ou métalloïdes,
d'éléments choisis parmi le palladium, le niobium, le tungstène, le fer notamment sous forme d'acier inoxydable, le titane, le chrome, le molybdène, le zirconium, le nickel, le tantale, le zinc, l'étain et le silicium.

La couche absorbante peut être essentiellement sous forme élémentaire métal ou métalloïde. Selon l'invention, un matériau sous forme élémentaire signifie que ce matériau n'est pas volontairement combiné ou lié à un autre élément tel que l'oxygène, l'azote ou le carbone. Cela signifie par exemple que ce matériau n'est ni sous forme oxydé, nitruré, carburée.

Bien qu'essentiellement sous forme élémentaire, le métal ou le métalloïde peut présenter des traces de nitruration dues à l'atmosphère de dépôt polluée par l'azote des zones de dépôt voisines. La couche absorbante peut être une couche d'un métal ou d'un métalloïde choisi parmi le silicium, le palladium, le niobium, le tungstène, l'acier inoxydable, le titane, le chrome, le molybdène, le zirconium, le nickel, le tantale, le zinc, des alliages de ces éléments comme NiCr, NiCrW, WTa, WCr, NbZr, TaNiV, CrZr et NbCr.

La couche absorbante peut être un nitrure ou un sous-nitrure, c'est-à-dire un nitrure sous-stoechiométrique en azote. De préférence, la couche absorbante est un couche de nitrure choisi parmi SnZnN, TiN, NiCrWN, NiVN, TaN, CrN, ZrN, CrZrN, TiAIN, TiZrN, WN, SiZrN et SiNiCrN.

Selon les modes de réalisation préférés, la couche absorbante est choisie parmi une couche de nitrure de nickel et/ou de chrome, une couche de nitrure de titane, une couche de nitrure de niobium ou une couche à base de silicium.

La couche à base de nitrure de nickel et de chrome présente par ordre de préférence croissant un rapport en poids de nickel sur chrome compris entre 90/10 et 70/30, de préférence un rapport 80/20.

L'épaisseur de la couche absorbante, est par ordre de préférence croissant comprise de 0,1 à 20, 0,2 à 10 nm, de 0,3 à 8, de 0,5 à 5 nm, de 1,0 à 4 nm, de 1,5 à 3,0 nm.

La nature absorbante de la couche d'ajustement colorimétrique a pour effet que cette couche diminue nécessairement la transmission lumineuse du matériau ou du vitrage la comprenant. Pour atténuer cet effet, sont adjoints à la couche absorbante des revêtements diélectriques comprenant des couches diélectriques dont les matériaux et épaisseurs sont judicieusement choisis. Par exemple, la couche absorbante peut être disposée entre deux revêtements diélectriques comprenant des couches diélectriques à haut et bas indices de réfraction permettant dans une certaine mesure de moduler la transmission lumineuse et l'absorption.

Ces revêtements diélectriques permettent également de protéger la couche absorbante.

Le revêtement absorbant d'ajustement colorimétrique comprend un revêtement diélectrique et une couche absorbante.

Le revêtement absorbant d'ajustement colorimétrique peut comprendre en partant du substrat :
- éventuellement un revêtement diélectrique inférieur,
- une couche absorbante,
- un revêtement diélectrique supérieur.

Le revêtement absorbant d'ajustement colorimétrique peut comprendre en partant du substrat :
- éventuellement un revêtement diélectrique inférieur,
- une couche absorbante,
- un revêtement diélectrique intermédiaire,
- une couche absorbante,
- un revêtement diélectrique supérieur.

Les revêtements diélectriques du revêtement absorbant d'ajustement colorimétrique peuvent satisfaire une ou plusieurs des caractéristiques suivantes :
- le revêtement diélectrique intermédiaire ou supérieur comprend une couche haut indice présentant un indice de réfraction, par ordre de préférence croissant supérieur à 1,85, supérieur à 1,90, supérieur à 2,00, supérieur à 2,10, supérieur à 2,20, et/ou
- le revêtement diélectrique intermédiaire ou supérieur comprend une couche bas indice présentant un indice de réfraction, par ordre de préférence croissant inférieur à 1,75, inférieur à 1,60, ou inférieure à 1,50 et/ou
- le revêtement diélectrique intermédiaire ou supérieur comprend une séquence d'au moins deux couches diélectriques dont la variation d'indice de réfraction entre au moins deux couches est, par ordre de préférence croissant supérieure à 0,2, supérieure à 0,4, supérieure à 0,5, supérieure à 0,6, supérieure à 0,7, supérieure à 0,8 et/ou
- le revêtement diélectrique intermédiaire ou supérieur comprend une séquence d'au moins deux couches diélectriques dont :
   - une couche bas indice présentant un indice de réfraction inférieur à 1,75, de préférence inférieur à 1,60, voire inférieure à 1,50 et
   - une couche haut indice présentant un indice de réfraction, par ordre de préférence croissant supérieur à 1,85, supérieur à 1,90, supérieur à 2,00 supérieur à 2,10, supérieur à 2,20, supérieur à 2,30 et/ou
- le revêtement diélectrique intermédiaire ou supérieur comprend une couche bas indice située en dessous d'une couche haut indice, et/ou
- le revêtement diélectrique inférieur comprend une couche haut indice présentant un indice de réfraction, par ordre de préférence croissant supérieur à 1,85, supérieur à 1,90, supérieur à 2,00, supérieur à 2,10, supérieur à 2,20, et/ou
- le revêtement diélectrique inférieur comprend une couche bas indice présentant un indice de réfraction, par ordre de préférence croissant inférieur à 1,75, inférieur à 1,60, ou inférieure à 1,50 et/ou
- le revêtement diélectrique inférieur comprend une séquence d'au moins deux couches diélectriques dont la variation d'indice de réfraction entre au moins deux couches est, par ordre de préférence croissant supérieure à 0,2, supérieure à 0,4, supérieure à 0,5, supérieure à 0,6, supérieure à 0,7, supérieure à 0,8 et/ou
- le revêtement diélectrique inférieur comprend une séquence d'au moins deux couches diélectriques dont :
   - une couche haut indice présentant un indice de réfraction, par ordre de préférence croissant supérieur à 1,85, supérieur à 1,90, supérieur à 2,00, supérieur à 2,10, supérieur à 2,20,
   - une couche bas indice présentant un indice de réfraction inférieur à 1,75, de préférence inférieur à 1,60, voire inférieure à 1,50, et/ou
- le revêtement diélectrique inférieur comprend une couche haut indice située en dessous d'une couche bas indice.

Les couches à haut indice de réfraction ont de préférence un indice de réfraction strictement supérieur à 1,85, supérieur à 1,90, strictement supérieur à 2,00, et de façon encore préférée supérieur ou égal à 2,30. Ces couches peuvent être à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

Les couches haut indice selon l'invention peuvent être choisies parmi :
- une couche d'oxyde de zinc (indice à 550 nm : environ 1,95),
- une couche d'oxyde de zinc et d'étain (indice à 550 nm : environ 2,04),
- une couche de nitrure de silicium Si₃N₄ (indice à 500 nm : environ 2,06)
- une couche d'oxyde de tungstène WO₃ (indice à 550 nm : environ 2,15),
- une couche d'oxyde de manganèse MnO (indice à 550 nm : environ 2,16),
- une couche de nitrure de silicium et de zirconium (indice à 550 nm : compris entre environ 2,15 et 2,55),
- une couche d'oxyde de niobium Nb₂O₅ (indice à 550 nm : environ 2,30),
- une couche d'oxyde de titane TiO₂ (indice à 500 : environ 2,45),
- une couche de nitrure de zirconium Zr₃N₄ (indice à 550 nm : environ 2,55),
- une couche d'oxyde de bismuth Bi₂O₃ (indice à 550 nm : environ 2,60).

Les couches à bas indice de réfraction sont constituées essentiellement d'oxyde de silicium.

Le choix d'une couche absorbante ajoute aussi de la flexibilité dans le design en levant la dégénérescence des spectres en réflexion de chaque côté d'un revêtement non absorbant.

Le matériau selon l'invention peut également comprendre plusieurs revêtements d'ajustement colorimétrique. Selon ce mode de réalisation, le matériau comporte au moins deux revêtements d'ajustement colorimétrique comprenant une couche absorbante, chacun situé sur des faces différentes d'un des substrats, à l'exclusion de la ou les faces revêtues du revêtement fonctionnel.

Pour obtenir un vitrage appartenant à une certaine gamme de transmission lumineuse, on choisit un revêtement fonctionnel appartenant à une gamme de transmission lumineuse plus élevée auquel on adjoint le revêtement absorbant d'ajustement colorimétrique.

Le revêtement fonctionnel comprend une ou plusieurs couches fonctionnelles métalliques à base d'argent, chacune disposée entre deux revêtements diélectriques. Le revêtement fonctionnel peut notamment comprendre une, deux, trois ou quatre couches fonctionnelles métalliques. Selon ces modes de réalisation :
- le revêtement fonctionnel comprend au moins une couche métallique fonctionnelle à base d'argent, ou
- le revêtement fonctionnel comprend au moins deux couches métalliques fonctionnelles à base d'argent, ou
- le revêtement fonctionnel comprend au moins trois couches métalliques fonctionnelles à base d'argent.

Les couches fonctionnelles métalliques à base d'argent comprennent au moins 95,0 %, de préférence au moins 96,5 % et mieux au moins 98,0 % en masse d'argent par rapport à la masse de la couche fonctionnelle. De préférence, une couche métallique fonctionnelle à base d'argent comprend moins de 1,0% en masse de métaux autres que de l'argent par rapport à la masse de la couche métallique fonctionnelle à base d'argent.

De préférence, les épaisseurs des couches métalliques fonctionnelles en partant du substrat augmentent. L'augmentation d'épaisseur entre deux couches fonctionnelles successives est supérieure à 0,8 nm, supérieure à 1 nm, supérieure à 2 nm, supérieure à 3 nm ou supérieure à 4 nm.

Selon des modes de réalisation avantageux de l'invention, les couches métalliques fonctionnelles satisfont une ou plusieurs des conditions suivantes :
- le rapport de l'épaisseur entre deux couches fonctionnelles successives est, compris entre 1,05 et 2,30 en incluant ces valeurs,
- l'épaisseur de chaque couche métallique fonctionnelle est comprise entre 6 et 20 nm.

L'empilement peut comprendre en outre au moins une couche de blocage située au contact d'une couche métallique fonctionnelle.

Les couches de blocage ont traditionnellement pour fonction de protéger les couches fonctionnelles d'une éventuelle dégradation lors du dépôt du revêtement antireflet supérieur et lors d'un éventuel traitement thermique à haute température, du type recuit, bombage et/ou trempe.

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles qu'une couche de Ti, TiN, TiOx, Nb, NbN, Ni, NiN, Cr, CrN, NiCr, NiCrN. Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, la ou les couches de blocage satisfont une ou plusieurs des conditions suivantes :
- chaque couche métallique fonctionnelle est au contact d'au moins une couche de blocage choisie parmi une sous-couche de blocage et une surcouche de blocage, et/ou
- chaque couche métallique fonctionnelle est au contact d'une surcouche de blocage, et/ou
- l'épaisseur de chaque couche de blocage est d'au moins 0,1 nm, de préférence comprise entre 0,2 et 2,0 nm.

Selon l'invention, les couches de blocage sont considérées comme ne faisant pas partie d'un revêtement diélectrique. Cela signifie que leur épaisseur n'est pas prise en compte dans le calcul de l'épaisseur optique du revêtement diélectrique situé à leur contact.

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Les couches diélectriques des revêtements présentent les caractéristiques suivantes seules ou en combinaison :
- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 4 et 100 nm. Selon des modes de réalisation avantageux de l'invention, les revêtements diélectriques des revêtements fonctionnels satisfont une ou plusieurs des conditions suivantes :
- les couches diélectriques peuvent être à base d'oxyde ou de nitrure d'un ou plusieurs éléments choisis parmi le silicium, le zirconium, le titane, l'aluminium, l'étain, le zinc, et/ou
- au moins un revêtement diélectrique comporte au moins une couche diélectrique à fonction barrière, et/ou
- chaque revêtements diélectrique comporte au moins une couche diélectrique à fonction barrière, et/ou
- les couches diélectriques à fonction barrière sont à base de composés de silicium et/ou d'aluminium choisis parmi les oxydes tels que SiO₂ et Al₂O₃, les nitrures de silicium Si₃N₄ et AIN et les oxynitrures SiOₓN_{y} et AlOₓN_{y}, à base d'oxyde de zinc et d'étain ou à base d'oxyde de titane,
- les couches diélectriques à fonction barrière sont à base de composés de silicium et/ou d'aluminium comprennent éventuellement au moins un autre élément, comme l'aluminium, le hafnium et le zirconium, et/ou
- au moins un revêtement diélectrique comprend au moins une couche diélectrique à fonction stabilisante, et/ou
- chaque revêtement diélectrique comprend au moins une couche diélectrique à fonction stabilisante, et/ou
- les couches diélectriques à fonction stabilisante sont de préférence à base d'oxyde choisi parmi l'oxyde de zinc, l'oxyde d'étain, l'oxyde de zirconium ou un mélange d'au moins deux d'entre eux, et/ou
- les couches diélectriques à fonction stabilisante sont de préférence à base d'oxyde cristallisé, notamment à base d'oxyde de zinc, éventuellement dopé à l'aide d'au moins un autre élément, comme l'aluminium, et/ou
- chaque couche fonctionnelle est au-dessus d'un revêtement diélectrique dont la couche supérieure est une couche diélectrique à fonction stabilisante, de préférence à base d'oxyde de zinc et/ou en-dessous d'un revêtement diélectrique dont la couche inférieure est une couche diélectrique à fonction stabilisante, de préférence à base d'oxyde de zinc.

De préférence, chaque revêtement diélectrique est constitué uniquement d'une ou de plusieurs couches diélectriques. De préférence, il n'y a donc pas de couche absorbante dans les revêtements diélectriques afin de ne pas diminuer la transmission lumineuse.

Si un revêtement diélectrique d'un revêtement fonctionnel comprend une couche absorbante pour laquelle l'indice de réfraction à 550 nm comprend une partie imaginaire de la fonction diélectrique non nulle (ou non négligeable), par exemple une couche métallique, l'épaisseur de cette couche n'est pas prise en compte pour le calcul de l'épaisseur optique.

Les couches diélectriques peuvent présenter une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi les couches :
- à base de composés de silicium et/ou d'aluminium choisis parmi les oxydes tels que SiO₂ et Al₂O₃, les nitrures tels que les nitrures tels que Si₃N₄ et AIN, et les oxynitrures tels que SiOₓN_{y,} AlOxNy éventuellement dopé à l'aide d'au moins un autre élément,
- à base d'oxyde de zinc et d'étain,
- à base d'oxyde de titane.

De préférence, chaque revêtement comporte au moins une couche diélectrique constituée :
- d'un nitrure ou d'un oxynitrure d'aluminium et/ou de silicium ou
- d'un oxyde mixte de zinc et d'étain, ou
- d'un oxyde de titane.

Ces couches diélectriques ont une épaisseur :
- inférieure ou égale à 40 nm, inférieure ou égale à 30 nm ou inférieure ou égale à 25 nm, et/ou
- supérieure ou égale à 5 nm, supérieure ou égale à 10 nm ou supérieure ou égale à 15 nm.

Les revêtements fonctionnels de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisantes peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

La couche d'oxyde de zinc peut être éventuellement dopée à l'aide d'au moins un autre élément, comme l'aluminium. L'oxyde de zinc est cristallisé. La couche à base d'oxyde de zinc comprend, par ordre de préférence croissant au moins 90,0 %, au moins 92 %, au moins 95 %, au moins 98,0 % en masse de zinc par rapport à la masse d'éléments autres que de l'oxygène dans la couche à base d'oxyde de zinc.

De préférence, les revêtements diélectriques des revêtements fonctionnels comprennent une couche diélectrique à base d'oxyde de zinc située en-dessous et directement au contact de la couche métallique à base d'argent.

Les couches d'oxyde de zinc ont, par ordre de préférence croissant, une épaisseur :
- d'au moins 3,0 nm, d'au moins 4,0 nm, d'au moins 5,0 nm, et/ou
- d'au plus 25 nm, d'au plus 10 nm, d'au plus 8,0 nm.

Le revêtement fonctionnel peut éventuellement comprendre une couche supérieure de protection. La couche supérieure de protection est de préférence la dernière couche de l'empilement, c'est-à-dire la couche la plus éloignée du substrat revêtu de l'empilement. Ces couches supérieures de protection sont considérées comme comprises dans le dernier revêtement diélectrique. Ces couches ont en général une épaisseur comprise entre 2 et 10 nm, de préférence 2 et 5 nm.

La couche de protection peut être choisie parmi une couche de titane, de zirconium, d'hafnium, de zinc et/ou d'étain, ce ou ces métaux étant sous forme métallique, oxydée ou nitrurée. Avantageusement, la couche de protection est une couche d'oxyde de titane, une couche d'oxyde de zinc et d'étain ou une couche à base d'oxyde de titane et de zirconium.

Un mode de réalisation particulièrement avantageux concerne un substrat revêtu d'un empilement défini en partant du substrat transparent comprenant :
- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante et une couche à fonction barrière,
- éventuellement une couche de protection.

Un autre mode de réalisation particulièrement avantageux concerne un substrat revêtu d'un empilement défini en partant du substrat transparent comprenant :
- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante inférieure, une couche à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant au moins une couche diélectrique à fonction stabilisante, une couche à fonction barrière,
- éventuellement une couche de protection.

Un autre mode de réalisation particulièrement avantageux concerne un substrat revêtu d'un empilement défini en partant du substrat transparent comprenant :
- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante inférieure, une couche à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant au moins une couche diélectrique à fonction stabilisante inférieure, une couche à fonction barrière, une couche diélectrique à fonction stabilisante supérieure,
- éventuellement une couche de blocage,
- une troisième couche fonctionnelle,
- éventuellement une couche de blocage,
- un quatrième revêtement diélectrique comprenant au moins une couche diélectrique à fonction stabilisante, une couche à fonction barrière,
- éventuellement une couche de protection.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

La transmission lumineuse (TL) des substrats de type verre sodo-calcique ordinaire, sans empilement est supérieure à 89 %, de préférence de 90 %.

Un verre clair ordinaire de 4 à 6 mm d'épaisseur présente les caractéristiques lumineuses suivantes :
- une transmission lumineuse comprise entre 89 et 91,5 %,
- une réflexion lumineuse comprise entre 7 et 9,5 %,
- une absorption lumineuse comprise entre 0,3 et 3 %.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Le matériau, c'est-à-dire le substrat revêtu du revêtement fonctionnel, peut subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu du revêtement fonctionnel peut donc être bombé et/ou trempé.

Le vitrage est de préférence choisi parmi les vitrages multiples, notamment un double-vitrage ou un triple vitrage.

Selon des modes de réalisation avantageux, le vitrage de l'invention sous forme d'un double vitrage comprenant le revêtement fonctionnel positionné en face 2 permet d'atteindre notamment les performances suivantes :
- un facteur solaire g inférieur ou égal à 40 %, inférieur à 30 %, de préférence inférieur ou égal à 29 % et/ou
- une transmission lumineuse, comprise entre 25 et 70 %, comprise entre 40 % et 70 %, comprise entre 40 % et 60 % ou comprise entre 50 et 60 % et/ou
- une sélectivité élevée, par ordre de préférence croissant, d'au moins 1,6, et/ou
- une réflexion lumineuse côté extérieur variable notamment dans certaines applications inférieures ou égale à 25 %, mais pour d'autres applications supérieures ou égales à 25 %, et/ou
- une réflexion lumineuse côté intérieur inférieure ou égale à 25 %, de préférence inférieur ou égale à 15 %, et/ou
- des valeurs de a* et b* en réflexion extérieure comprise, par ordre de préférence croissant, entre -5 et +5, entre -4 et +4, entre -3 et +3, entre -2 et +2, entre -1 et +1, et/ou
- des valeurs de a* et b* en réflexion intérieure comprise, par ordre de préférence croissant, entre -5 et +5, entre -4 et +4, entre -3 et +3, entre -2 et +2, entre -1 et +1, et/ou
- des valeurs de a* et b* en transmission comprise, par ordre de préférence croissant, entre -5 et +5, entre -4 et +4, entre -3 et +3, entre -2 et +2, entre -1 et +1.

Les détails et caractéristiques avantageuses de l'invention ressortent des exemples non limitatifs suivants.

### Exemples

### I. Nature des couches et revêtements

Des revêtements fonctionnels définis ci-après sont déposés sur des substrats en verre sodo-calcique clair d'une épaisseur de 4 mm.

Les couches métalliques fonctionnelles (CF) sont des couches d'argent (Ag). Les couches de blocage sont des couches métalliques en alliage de nickel et de chrome (NiCr). Les revêtements diélectriques des revêtements fonctionnels comprennent des couches barrières et des couches stabilisantes. Les couches barrières sont à base de nitrure de silicium, dopé à l'aluminium (Si₃N₄ : Al) ou à base d'oxyde mixte de zinc et d'étain (SnZnOx). Les couches stabilisantes sont en oxyde de zinc (ZnO). Les couches de protection sont en oxyde de titane (TiOx).

Les couches absorbantes des revêtements absorbants d'ajustement colorimétrique testées sont des couches métalliques de nickel et de chrome, des couches métalliques d'étain et de zinc, des couches de nitrure de zinc et d'étain, des couches de nitrure de niobium, des couches de nitrure de titane.

Les revêtements diélectriques des revêtements absorbants d'ajustement colorimétrique comprennent :
- des couches d'oxyde de silicium correspondant à des couches bas indices,
- des couches d'oxyde de titane et des couches de nitrure de silicium correspondant à des couches haut indices.

Les conditions de dépôt des couches, qui ont été déposées par pulvérisation (pulvérisation dite « cathodique magnétron »), sont résumées dans le tableau 1

| **Tab. 1** | **Cible employée** | **Pression de dépôt** | **Gaz** |
|---|---|---|---|
| Si₃N₄ | Si:Al à 92:8 % en poids | 3,2.10-3 mbar | Ar /(Ar + N2) à 55 % |
| ZnO | Zn:Al à 98:2 % en poids | 1,8.10-3 mbar | Ar /(Ar + 02) à 63 % |
| SnZnOx | Sn:Zn (60:40% en pds) | 1,5*10⁻³ mbar | Ar /(Ar + 02) à 39 % |
| TiO2 | Ti | 2.10-3 mbar | 94% 02 |
| NiCr | Ni (80% at.) : Cr (20% at.) | 2-3.10⁻³ mbar | Ar à 100 % |
| Ag | Ag | 3.10-3 mbar | Ar à 100 % |
| SiO2 | Si | 2.10-3 mbar | Ar à 48% |
| NbN | Nb | 2.10-3 mbar | Ar à 60% |
| SnZnN | Sn:Zn (60:40% en pds) | 1,5*10⁻³ mbar | N2 /(Ar + N2) : 10-80 % |
| TiN | Ti | 2.10-3 mbar | N2 /(Ar + N2) : 10-80 % |
| NiCrN | Ni (80% at.) : Cr (20% at.) | 2-3.10⁻³ mbar | N2 /(Ar + N2) : 10-80 % |

| | | | |
|---|---|---|---|
| At. = atomique. | | | |

### II. Revêtements absorbants d'ajustement colorimétrique

Le tableau 2 ci-dessous résume les caractéristiques liées aux épaisseurs des couches absorbantes et des couches diélectriques constituant les revêtements diélectriques des revêtements absorbants d'ajustement colorimétrique.

Les épaisseurs des couches absorbantes et de couches diélectriques sont des épaisseurs physiques.

| **Tableau 2** | | | | | | | | | | | |
|---|---|---|---|---|---|---|---|---|---|---|---|
| Nature | | CN1 | CN2 | CN3 | CN4 | CB1 | CBr1 | CN5 | CN6 | CN7 | CN8 |
| RDS | Si₃N₄ | - | 29,5 | 29 | - | - | - | - | - | - | 10 |
| | SiO₂ | 48,8 | - | - | 19,1 | 23,8 | 46 | - | - | - | - |
| | TiO₂ | - | - | - | - | - | - | 24,0 | 15,3 | 82,3 | - |
| CA 1 | SnZnN | - | 1,7 | - | - | - | - | - | - | - | - |
| | NbN | 1,5 | - | - | 8,4 | 4,8 | - | - | 1,7 | 2,0 | 11,5 |
| | NiCrN | - | - | 3,7 | - | - | - | - | - | - | - |
| | TiN | - | - | - | - | - | 13,4 | 7,3 | - | - | - |
| RDInt | SiO₂ | - | - | - | - | - | - | - | - | - | 57,4 |
| CA 2 | TiN | - | - | - | - | - | - | - | - | - | 27,8 |
| | Si₃N₄ | - | 9,5 | - | - | 13,9 | - | - | - | 6,4 | - |
| RDI | SiO₂ | 37,9 | 22,8 | 10,6 | - | 10,3 | - | 26,7 | 45 | - | 5 |
| | TiO₂ | - | - | 9,2 | - | 23,1 | - | - | 18,2 | - | - |
| | SiO₂ | - | - | - | - | 30 | - | - | - | - | - |
| | TiO₂ | - | - | - | - | 30 | 86,7 | 22,2 | - | - | - |
| | Si₃N₄ | 25,5 | 17,9 | - | 17,3 | - | - | - | - | - | - |
| SUB | PLC | 4 | 4 | 4 | 4 | 4 | 4 | 4 | 4 | 4 | 4 |

| | | | | | | | | | | | |
|---|---|---|---|---|---|---|---|---|---|---|---|
| RDS = revêtement diélectrique supérieur; CA = couche absorbante; RDInt = Revêtement diélectrique intermédiaire ; RDI = Revêtement diélectrique inférieur ; SUB = Substrat | | | | | | | | | | | |

### III. Revêtements fonctionnels

Des revêtements fonctionnels conférant des propriétés de contrôle solaire ont été déposés grâce à un dispositif de pulvérisation cathodique assisté par champ magnétique (magnétron).

Le premier revêtement fonctionnel, appelé ci-après RF1 est un bi-couches Ag, comprend successivement à partir du substrat une alternance de deux couches d'argent (couches métalliques fonctionnelles) et de trois revêtements diélectriques, chaque revêtement diélectrique comportant au moins une couche diélectrique, de manière à ce que chaque couche métallique fonctionnelle soit disposée entre deux revêtements diélectriques. L'épaisseur totale de ce revêtement fonctionnel est comprise entre 150 et 200 nm.

Le deuxième revêtement fonctionnel, appelé ci-après RF2 est un bi-couches Ag, comprend un empilement comportant successivement à partir du substrat une alternance de deux couches d'argent et de trois revêtements diélectriques, chaque revêtement diélectrique comportant plusieurs couches diélectriques, de manière à ce que chaque couche d'argent soit disposée entre deux revêtements diélectriques. L'épaisseur totale de ce revêtement fonctionnel est comprise entre 150 et 200 nm.

Le troisième revêtement fonctionnel, appelé ci-après RF 3 est un tri-couches Ag, comprend successivement à partir du substrat une alternance de trois couches d'argent (couches métalliques fonctionnelles) et de quatre revêtements diélectriques, chaque revêtement diélectrique comportant au moins une couche diélectrique, de manière à ce que chaque couche métallique fonctionnelle soit disposée entre deux revêtements diélectriques. L'épaisseur totale de ce revêtement fonctionnel est comprise entre 200 et 250 nm.

Le tableau 3 ci-dessous liste les principales caractéristiques optiques de matériaux comprenant un substrat transparent dont l'une des faces est revêtue d'un des revêtements fonctionnels RF1, RF2 ou RF3 assemblés sous forme de doubles vitrages de structure 6/16/4 : verre de 6 mm / espace intercalaire de 16 mm rempli de 90 % d'argon et 10 % d'air / verre de 4 mm, le revêtement fonctionnel étant positionné en face 2.

### IV. Configuration des doubles vitrages et vitrages feuilletés

Les matériaux comprenant un substrat transparent dont l'une des faces du substrat est revêtue d'un revêtement fonctionnel ont été assemblés sous forme de double vitrage ou sous forme de vitrage feuilleté.

Les doubles vitrages, ci-après configuration « DGU », ont une structure 6/16/4 : verre de 6 mm / espace intercalaire de 16 mm rempli de 90 % d'argon et 10 % d'air / verre de 4 mm, le revêtement fonctionnel étant positionné en face 2. Le revêtement absorbant d'ajustement colorimétrique de l'invention lorsqu'il est présent est positionné en face 1 ou en face 3.

Les vitrages feuilletés, ci-après configuration « Lam. », ont une structure de type premier substrat / feuille(s) / deuxième substrat. Le revêtement fonctionnel est positionné en face 2 et le revêtement absorbant d'ajustement colorimétrique est positionné en face 1 ou 3.

### V. Performances « contrôle solaire » et colorimétrie

Le tableau 3 ci-dessous liste les principales caractéristiques optiques de matériaux comprenant un substrat transparent dont l'une des faces est revêtue d'un revêtement fonctionnel assemblés sous forme de vitrage multiple ou de vitrage feuilleté et éventuellement un revêtement absorbant d'ajustement colorimétrique.

| Tableau 3 | | | | | | | | | | | | | | | | |
|---|---|---|---|---|---|---|---|---|---|---|---|---|---|---|---|---|
| Matériau | Conf. | C.N. | | R. F. | | TL % | a*T | b*T | Rext % | a*Rext | b*Rext | Rint % | a*int | b*int | g | s |
| | | Position | Nature | Position | Nature | | | | | | | | | | | |
| Ref. 1 | DGU | Aucune | | Face 2 | RF1 | 70 | -4,5 | 3 | 13 | -2.0 | -9.5 | 15 | 1.0 | -1.0 | 37 | 1,9 |
| Ref. 2 | DGU | Aucune | | Face 2 | RF2 | 52 | -10,5 | -1,5 | 18 | -3.0 | -9,1 | 23 | 9,4 | 4,0 | 28 | 1,9 |
| Ref. 3 | DGU | Aucune | | Face 2 | RF3 | 47 | -8,5 | 1 | 16 | -5 | -9 | 18 | -11 | -10 | 21 | 2,2 |
| Inv. 1 | DGU | Face 1 | CN1 | Face 2 | RF1 | 60 | -4,2 | 2,1 | 14 | -0,8 | -2,2 | 15 | -0,2 | 1,3 | 34 | 1,8 |
| Inv. 2 | DGU | Face 1 | CN2 | Face 2 | RF1 | 52 | -4 | -0,4 | 18 | -0,1 | -2,3 | 18 | -1,4 | 0,8 | 30 | 1,7 |
| Inv. 3 | DGU | Face 1 | CN3 | Face 2 | RF1 | 41 | -3,3 | 0,8 | 19 | -0,5 | -2 | 19 | -2,0 | -0,9 | 24 | 1,7 |
| Inv. 4 | DGU | Face 1 | CN4 | Face 2 | RF1 | 32 | -3,4 | -0,4 | 25 | 0,29 | -1,6 | 17 | -0,8 | -0,17 | 19 | 1,6 |
| Inv. 5 | DGU | Face 1 | CB1 | Face 2 | RF1 | 42 | -3 | 2,3 | 21 | -4 | -15,8 | 16 | -2,5 | -2 | 25 | 1,7 |
| Inv. 6 | DGU | Face 1 | CBR1 | Face 2 | RF1 | 41 | -6 | 3 | 18 | 13,5 | 16 | 17 | 1,9 | 2,85 | 23 | 1,8 |
| Inv. 7 | DGU | Face 3 | CN5 | Face 2 | RF1 | 53 | -4,8 | 0,9 | 20 | -2,7 | -1,9 | 15 | 0 | 0,5 | 30 | 1,8 |
| Inv. 8 | Lam. | Face 1 | CN6 | Face 2 | RF1 | 55 | -5,5 | 2,3 | 19,2 | -3,6 | 0,2 | 15,1 | 0,8 | -7,4 | 36 | 1,5 |
| Inv. 9 | Lam. | Face 3 | CN7 | Face 2 | RF1 | 53 | -5,7 | 2,5 | 19,9 | -4,5 | -8,1 | 16,7 | 2,0 | 1,7 | 33,8 | 1,6 |
| Inv. 10 | DGU | Face 1 | CN8 | Face 2 | RF3 | 5 | -6 | 0,4 | 19 | -0,2 | -1,5 | 20 | -8,8 | -7,4 | 5 | 1,0 |

En comparant, Inv.2 et Ref.1, on constate que l'on obtient à partir d'un revêtement fonctionnel à haute TL (Ref. 1 avec RF1), un vitrage présentant une transmission lumineuse, un réflexion intérieure et extérieure proches de celles d'un vitrage présentant une moyenne TL (Ref. 2 avec RF2) mais avec des couleurs beaucoup plus neutres.

Il est également possible grâce à l'invention de moduler la TL. En effet à partir d'un vitrage comprenant un revêtement fonctionnel à haute TL (Ref. 1 avec RF1), on obtient une gamme de vitrage sans restriction de T_{L}, par exemple entre 60% et 30 % (Inv. 1 à Inv. 4) tout en préservant une excellente neutralité.

Il est également possible grâce à l'invention de moduler les couleurs réflexion et d'obtenir à partir d'un vitrage comprenant un revêtement fonctionnel à haute TL (Ref. 1 avec RF1), toute une gamme de vitrage présentant n'importe quelles couleurs notamment bleue, bronze ou neutre, comme on peut le voir dans le tableau 4.

| Tableau 4 | | | | | | | |
|---|---|---|---|---|---|---|---|
| Mat. | CN | CF | TL | Rext | a*Rext | b*Rext | Couleur en réflexion |
| Inv. 3 | CN3 | RF1 | 41 | 19 | -0,5 | -2 | Neutre |
| Inv. 5 | CB1 | RF1 | 42 | 21 | -4 | -15,8 | Bleu |
| Inv. 6 | CBR1 | RF1 | 41 | 18 | 13,5 | 16 | Bronze |

La couche de neutralisation peut être placée sur n'importe quelle face du vitrage sans revêtement fonctionnel, comme par exemple la face 1 (Inv. 1 à 6) ou la face 3 (Inv. 7).

Le matériau peut être installé en configuration DGU (Inv1 à 7) ou feuilleté (Inv. 8 et Inv. 9) ou toute autre configuration (triple vitrage, double vitrage feuilleté, etc.).

L'invention ne se restreint pas à l'usage d'empilements à haute T_{L} comme revêtements fonctionnels, ni aux revêtements fonctionnels avec deux couches d'argent. Inv. 10 présente par exemple le cas d'un vitrage à très basse T_{L} (5%) obtenu selon l'invention en utilisant un revêtement fonctionnel à trois couches d'argent de transmission lumineuse intermédiaire (50%).

## Revendications

1. Matériau comprenant un ou plusieurs substrats transparents, chaque substrat comprenant deux faces principales, **caractérisé en ce que** :
- une des faces d'un des substrats est revêtue d'un revêtement fonctionnel pouvant agir sur le rayonnement solaire et/ou le rayonnement infrarouge comprenant au moins une couche fonctionnelle métallique à base d'argent, chacune disposée entre deux revêtements diélectriques, et
- une face non revêtue du revêtement fonctionnel d'un des substrats comprend un revêtement absorbant d'ajustement colorimétrique comprenant en partant du substrat :
- une couche absorbante qui absorbe le rayonnement solaire dans la partie visible du spectre,
- un revêtement diélectrique supérieur.

2. Matériau selon la revendication 1 comprenant un substrat transparent comprenant deux faces principales, **caractérisé en ce que** :
- l'une des faces du substrat est revêtue d'un revêtement fonctionnel pouvant agir sur le rayonnement solaire et/ou le rayonnement infrarouge,
- l'autre face du substrat est revêtue d'un revêtement absorbant d'ajustement colorimétrique comprenant une couche absorbante qui absorbe le rayonnement solaire dans la partie visible du spectre.

3. Matériau selon la revendication 1 comprenant :
- un substrat transparent comprenant deux faces principales dont l'une des faces du substrat est revêtue d'un revêtement fonctionnel pouvant agir sur le rayonnement solaire et/ou le rayonnement infrarouge, et
- un substrat additionnel comprenant au moins deux faces principales,
**caractérisé en ce que** :
au moins une face non revêtue du revêtement fonctionnel d'un des substrats comprend un revêtement absorbant d'ajustement colorimétrique comprenant une couche absorbante qui absorbe le rayonnement solaire dans la partie visible du spectre,
ladite face est choisie parmi :
- l'autre face non revêtue du substrat revêtu d'un revêtement fonctionnel,
- l'une des faces d'un substrat additionnel.

4. Matériau selon l'une quelconque des revendications précédentes **caractérisé en ce que** la couche absorbante est une couche en un matériau présentant un rapport n/k tel que défini dans la description entre 0 et 5 en excluant ces valeurs sur au moins 60% de la plage de longueur d'onde du visible (de 380 nm à 780 nm).

5. Matériau selon l'une quelconque des revendications précédentes **caractérisé en ce que** l'absorption lumineuse due à la couche absorbante, mesurée côté verre en déposant uniquement cette couche absorbante enfermée entre deux couches diélectriques non absorbante sur du verre clair ordinaire de 4 mm à 6 mm d'épaisseur, mesurée, est supérieure à 5 %.

6. Matériau selon l'une quelconque des revendications précédentes **caractérisé en ce que** la couche absorbante est choisie parmi :
- les couches à base d'un ou plusieurs métaux et/ou métalloïdes,
- les couches de nitrure d'un ou plusieurs métaux et/ou métalloïdes,
- les couches d'oxynitrure d'un ou plusieurs métaux et/ou métalloïdes,
d'éléments choisis parmi le palladium, le niobium, le tungstène, le fer notamment l'acier inoxydable, le titane, le chrome, le molybdène, le zirconium, le nickel, le tantale, le zinc, l'étain et le silicium.

7. Matériau selon l'une quelconque des revendications précédentes **caractérisé en ce que** la couche absorbante est choisie parmi une couche de nitrure de nickel et/ou de chrome, une couche de nitrure de titane, une couche de nitrure de niobium ou une couche à base de silicium.

8. Matériau selon l'une quelconque des revendications précédentes **caractérisé en ce que** la couche absorbante présente une épaisseur comprise entre 0,1 et 20 nm.

9. Matériau selon l'une quelconque des revendications précédentes **caractérisé en ce que** le revêtement absorbant d'ajustement colorimétrique comprend un revêtement diélectrique et une couche absorbante.

10. Matériau selon l'une quelconque des revendications précédentes **caractérisé en ce que** le revêtement absorbant d'ajustement colorimétrique comprend en partant du substrat :
- un revêtement diélectrique inférieur,
- une couche absorbante,
- un revêtement diélectrique supérieur.

11. Matériau selon l'une quelconque des revendications précédentes **caractérisé en ce que** le revêtement absorbant d'ajustement colorimétrique comprend en partant du substrat :
- un revêtement diélectrique inférieur,
- une couche absorbante,
- un revêtement diélectrique intermédiaire,
- une couche absorbante,
- un revêtement diélectrique supérieur.

12. Matériau selon l'une quelconque des revendications 10 à 11 **caractérisé en ce que** le revêtement diélectrique inférieur comprend une couche haut indice présentant un indice de réfraction supérieur à 1,85.

13. Matériau selon la revendication 10 à 12 **caractérisé en ce que** le revêtement diélectrique inférieur comprend une séquence d'au moins deux couches diélectriques dont la variation d'indice de réfraction est supérieure à 0,2.

14. Matériau selon l'une quelconque des revendications 10 à 13 **caractérisé en ce que** le revêtement diélectrique inférieur comprend une séquence d'au moins deux couches diélectriques dont :
- une couche bas indice présentant un indice de réfraction inférieur à 1,75, et
- une couche haut indice présentant un indice de réfraction supérieur à 1,85.

15. Matériau selon l'une quelconque des revendications 10 à 13 **caractérisé en ce que** le revêtement diélectrique supérieur ou intermédiaire comprend une couche haut indice présentant un indice de réfraction supérieur à 1,85 et/ou une couche bas indice présentant un indice de réfraction inférieur à 1,75.

16. Matériau selon l'une quelconque des revendications précédentes **caractérisé en ce que** le revêtement fonctionnel comprend une ou plusieurs couches fonctionnelles métalliques, chacune disposée entre deux revêtements diélectriques.

17. Matériau selon l'une quelconque des revendications précédentes, **caractérisé en ce que** le substrat est en verre, notamment silico-sodo-calcique ou en matière organique polymérique.

18. Matériau selon l'une quelconque des revendications précédentes **caractérisé en ce que** le revêtement absorbant d'ajustement colorimétrique est positionné en face 1 et le revêtement fonctionnel pouvant agir sur le rayonnement solaire et/ou le rayonnement infrarouge est positionné en face 2.

19. Matériau selon l'une quelconque des revendications précédentes **caractérisé en ce qu'**il comporte au moins deux revêtements d'ajustement colorimétrique comprenant une couche absorbante, chacun situé sur des faces différentes d'un des substrats, à l'exclusion de la ou les faces revêtues du revêtement fonctionnel.

20. Vitrage comprenant un matériau selon l'une quelconque des revendications 1 à 19 **caractérisé en ce qu'**il est sous forme de vitrage monolithique, feuilleté et/ou multiple.

21. Vitrage multiple selon la revendication 20 **caractérisé en ce que** lorsque le matériau est monté dans un double vitrage avec le revêtement fonctionnel positionné en face 2, le double vitrage présente :
- une transmission lumineuse comprise entre 40 et 60 %,
- des valeurs de a* et b* en réflexion extérieure comprise, par ordre de préférence croissant, entre -5 et +5, entre -4 et +4, entre -3 et +3, entre -2 et +2, entre -1 et +1,
- des valeurs de a* et b* en réflexion intérieure comprise, par ordre de préférence croissant, entre -5 et +5, entre -4 et +4, entre -3 et +3, entre -2 et +2, entre -1 et +1,
- des valeurs de a* et b* en transmission comprise, par ordre de préférence croissant, entre -5 et +5, entre -4 et +4, entre -3 et +3, entre -2 et +2, entre -1 et +1.

22. Vitrage multiple selon la revendication 20, **caractérisé en ce que** lorsque le matériau est monté dans un double vitrage avec le revêtement fonctionnel positionné en face 2, le double vitrage présente :
- des valeurs de a* en réflexion extérieure comprise, par ordre de préférence croissant, entre -10 et -3,
- des valeurs de b* en réflexion extérieure comprise, par ordre de préférence croissant, entre -20 et -10.

23. Vitrage multiple selon la revendication 20, **caractérisé en ce que** lorsque le matériau est monté dans un double vitrage avec le revêtement fonctionnel positionné en face 2, le double vitrage présente des valeurs de a* et b* en réflexion extérieure comprise, par ordre de préférence croissant, entre 5 et 20.

24. Vitrage multiple selon la revendication 20 à 23 comprenant un matériau et au moins un second substrat, le matériau et le substrat additionnel sont séparés par au moins une lame de gaz intercalaire.

25. Vitrage feuilleté selon la revendication 20 comprenant un matériau et au moins un substrat additionnel, le matériau et le substrat additionnel sont séparés par au moins un intercalaire de feuilletage.

26. Vitrage feuilleté et multiple selon la revendication 20 comprenant un matériau et au moins deux substrat additionnels correspondant à un second substrat et un troisième substrat, le matériau et le troisième substrat sont séparés par au moins une lame de gaz intercalaire, et
- le matériau et le second substrat ou
- le second substrat et le troisième substrat,
sont séparés par au moins un intercalaire de feuilletage.

27. Vitrage multiple et/ou feuilleté selon la revendication 20 à 26 **caractérisé en ce que** le revêtement absorbant d'ajustement colorimétrique est positionné en face 1 et le revêtement fonctionnel pouvant agir sur le rayonnement solaire et/ou le rayonnement infrarouge est positionné en face 2 ou 3.

## Patentansprüche

1. Material, umfassend ein oder mehrere transparente Substrate, jedes Substrat umfassend zwei Hauptflächen, **dadurch gekennzeichnet, dass**:
- eine der Flächen eines der Substrate mit einer funktionellen Beschichtung beschichtet ist, die auf die Sonnenstrahlung und/oder die Infrarotstrahlung wirken kann und umfassend mindestens eine metallische funktionelle Schicht auf Silberbasis, die jeweils zwischen zwei dielektrischen Beschichtungen eingerichtet ist, und
- eine unbeschichtete Fläche der funktionellen Beschichtung eines der Substrate eine absorbierende Beschichtung für eine Farbanpassung umfasst, umfassend, ausgehend von dem Substrat:
- eine absorbierende Schicht, die die Sonnenstrahlung in dem sichtbaren Teil des Spektrums absorbiert,
- eine obere dielektrische Beschichtung.

2. Material nach Anspruch 1, umfassend ein transparentes Substrat, umfassend zwei Hauptflächen, **dadurch gekennzeichnet, dass**:
- eine der Flächen des Substrats mit einer funktionellen Beschichtung beschichtet ist, die auf die Sonnenstrahlung und/oder die Infrarotstrahlung wirken kann,
- die andere Fläche des Substrats mit einer absorbierenden Beschichtung für eine Farbanpassung beschichtet ist, umfassend eine absorbierende Schicht, die die Sonnenstrahlung in dem sichtbaren Teil des Spektrums absorbiert.

3. Material nach Anspruch 1, umfassend:
- ein transparentes Substrat, umfassend zwei Hauptflächen, wobei eine der Flächen des Substrats mit einer funktionellen Beschichtung beschichtet ist, die auf die Sonnenstrahlung und/oder die Infrarotstrahlung wirken kann, und
- ein zusätzliches Substrat, umfassend mindestens zwei Hauptflächen,
**dadurch gekennzeichnet, dass**:
mindestens eine unbeschichtete Fläche der funktionellen Beschichtung eines der Substrate eine absorbierende Beschichtung für eine Farbanpassung umfasst, umfassend eine absorbierende Schicht, die die Sonnenstrahlung in dem sichtbaren Teil des Spektrums absorbiert, wobei die Fläche ausgewählt ist aus:
- der anderen unbeschichteten Fläche des Substrats, die mit einer funktionellen Beschichtung beschichtet ist,
- einer der Flächen eines zusätzlichen Substrats.

4. Material nach einem der vorstehenden Ansprüche,
**dadurch gekennzeichnet, dass** die absorbierende Schicht eine Schicht aus einem Material ist, das ein Verhältnis n/k, wie in der Beschreibung definiert, zwischen 0 und 5 unter Ausschluss dieser Werte über mindestens 60 % des Wellenlängenbereichs des Sichtbaren (von 380 nm bis 780 nm) aufweist.

5. Material nach einem der vorstehenden Ansprüche,
**dadurch gekennzeichnet, dass** die Lichtabsorption aufgrund der absorbierenden Schicht, gemessen auf der Glasseite bei Aufbringen einzig dieser absorbierenden Schicht, die zwischen zwei nicht absorbierenden dielektrischen Schichten eingeschlossen ist, auf gewöhnliches Klarglas mit einer gemessenen Dicke von 4 mm bis 6 mm, bei über 5 % liegt.

6. Material nach einem der vorstehenden Ansprüche,
**dadurch gekennzeichnet, dass** die absorbierende Schicht ausgewählt ist aus:
- Schichten auf der Basis von einem oder mehreren Metallen und/oder Metalloiden,
- Nitridschichten aus einem oder mehreren Metallen und/oder Metalloiden,
- Oxynitridschichten aus einem oder mehreren Metallen und/oder Metalloiden,
Elementen, die ausgewählt sind aus Palladium, Niob, Wolfram, Eisen, insbesondere rostfreiem Stahl, Titan, Chrom, Molybdän, Zirkonium, Nickel, Tantal, Zink, Zinn und Silizium.

7. Material nach einem der vorstehenden Ansprüche,
**dadurch gekennzeichnet, dass** die absorbierende Schicht ausgewählt ist aus einer Nickel- und/oder Chromnitridschicht, einer Titannitridschicht, einer Niobiumnitridschicht oder einer Schicht auf Siliziumbasis.

8. Material nach einem der vorstehenden Ansprüche,
**dadurch gekennzeichnet, dass** die absorbierende Schicht eine Dicke aufweist, die zwischen 0,1 und 20 nm liegt.

9. Material nach einem der vorstehenden Ansprüche,
**dadurch gekennzeichnet, dass** die absorbierende Beschichtung für eine Farbanpassung eine dielektrische Beschichtung und eine absorbierende Schicht umfasst.

10. Material nach einem der vorstehenden Ansprüche,
**dadurch gekennzeichnet, dass** die absorbierende Beschichtung für eine Farbanpassung, ausgehend von dem Substrat, umfasst:
- eine untere dielektrische Beschichtung,
- eine absorbierende Schicht,
- eine obere dielektrische Beschichtung.

11. Material nach einem der vorstehenden Ansprüche,
**dadurch gekennzeichnet, dass** die absorbierende Beschichtung für eine Farbanpassung, ausgehend von dem Substrat, umfasst:
- eine untere dielektrische Beschichtung,
- eine absorbierende Schicht,
- eine mittlere dielektrische Beschichtung,
- eine absorbierende Schicht,
- eine obere dielektrische Beschichtung.

12. Material nach einem der Ansprüche 10 bis 11,
**dadurch gekennzeichnet, dass** die untere dielektrische Beschichtung eine Hochindexschicht, die einen Brechungsindex von über 1,85 aufweist, umfasst.

13. Material nach Anspruch 10 bis 12, **dadurch gekennzeichnet, dass** die untere dielektrische Beschichtung eine Folge von mindestens zwei dielektrischen Schichten umfasst, deren Variation des Brechungsindexes über 0,2 beträgt.

14. Material nach einem der Ansprüche 10 bis 13,
**dadurch gekennzeichnet, dass** die untere dielektrische Beschichtung eine Folge von mindestens zwei dielektrischen Schichten umfasst, wobei:
- eine Schicht mit niedrigem Index einen Brechungsindex von weniger als 1,75 aufweist, und
- eine Schicht mit hohem Index einen Brechungsindex von mehr als 1,85 aufweist.

15. Material nach einem der Ansprüche 10 bis 13,
**dadurch gekennzeichnet, dass** die obere oder mittlere dielektrische Beschichtung eine Schicht mit hohem Index, die einen Brechungsindex von mehr als 1,85 aufweist, und/oder eine Schicht mit niedrigem Index, die einen Brechungsindex von weniger als 1,75 aufweist, umfasst.

16. Material nach einem der vorstehenden Ansprüche,
**dadurch gekennzeichnet, dass** die funktionelle Beschichtung eine oder mehrere metallische funktionelle Schichten umfasst, die jeweils zwischen zwei dielektrischen Beschichtungen eingerichtet sind.

17. Material nach einem der vorstehenden Ansprüche,
**dadurch gekennzeichnet, dass** das Substrat aus Glas, insbesondere Kalk-Natron-Silikatglas, oder aus polymerem organischem Material besteht.

18. Material nach einem der vorstehenden Ansprüche,
**dadurch gekennzeichnet, dass** die absorbierende Beschichtung für eine Farbanpassung auf der Fläche 1 positioniert ist und die funktionelle Beschichtung, die auf die Sonnenstrahlung und/oder die Infrarotstrahlung wirken kann, auf der Fläche 2 positioniert ist.

19. Material nach einem der vorstehenden Ansprüche,
**dadurch gekennzeichnet, dass** es mindestens zwei Beschichtungen für eine Farbanpassung enthält, umfassend eine absorbierende Schicht, die sich jeweils auf unterschiedlichen Flächen eines der Substrate befinden, wobei die beschichtete(n) Fläche(n) der funktionellen Beschichtung ausgenommen ist/sind.

20. Verglasung, umfassend ein Material nach einem der Ansprüche 1 bis 19, **dadurch gekennzeichnet, dass** sie in Form einer monolithischen, laminierten und/oder Mehrfachverglasung vorliegt.

21. Mehrfachverglasung nach Anspruch 20, **dadurch gekennzeichnet, dass**, wenn das Material in einer Doppelverglasung montiert ist, wobei die funktionelle Beschichtung auf der Fläche 2 positioniert ist, die Doppelverglasung aufweist:
- eine Lichtdurchlässigkeit, die zwischen 40 und 60 % liegt,
- wobei Werte von a* und b* in der äußeren Reflexion in aufsteigender Reihenfolge vorzugsweise zwischen -5 und +5, zwischen -4 und +4, zwischen -3 und +3, zwischen -2 und +2, zwischen -1 und +1, liegen,
- Werte von a* und b* in der inneren Reflexion in aufsteigender Reihenfolge vorzugsweise zwischen -5 und +5, zwischen -4 und +4, zwischen -3 und +3, zwischen -2 und +2, zwischen -1 und +1, liegen,
- Werte von a* und b* in der Übertragung in aufsteigender Reihenfolge vorzugsweise zwischen -5 und +5, zwischen -4 und +4, zwischen -3 und +3, zwischen -2 und +2, zwischen -1 und +1 liegen.

22. Mehrfachverglasung nach Anspruch 20, **dadurch gekennzeichnet, dass**, wenn das Material in einer Doppelverglasung montiert ist, wobei die funktionelle Beschichtung auf der Fläche 2 positioniert ist, die Doppelverglasung aufweist:
- Werte von a* in der äußeren Reflexion, die in aufsteigender Reihenfolge vorzugsweise zwischen -10 und -3 liegen,
- Werte von b* in der äußeren Reflexion, die in aufsteigender Reihenfolge vorzugsweise zwischen -20 und -10 liegen.

23. Mehrfachverglasung nach Anspruch 20, **dadurch gekennzeichnet, dass**, wenn das Material in einer Doppelverglasung montiert ist, wobei die funktionelle Beschichtung auf der Fläche 2 positioniert ist, die Doppelverglasung Werte von a* und b* in der äußeren Reflexion aufweist, die in aufsteigender Reihenfolge vorzugsweise zwischen 5 und 20 liegen.

24. Mehrfachverglasung nach Anspruch 20 bis 23, umfassend ein Material und mindestens ein zweites Substrat, wobei das Material und das zusätzliche Substrat durch mindestens eine Zwischenlage aus Gas getrennt sind.

25. Verbundverglasung nach Anspruch 20, umfassend ein Material und mindestens ein zusätzliches Substrat, wobei das Material und das zusätzliche Substrat durch mindestens eine Verbundzwischenlage getrennt sind.

26. Verbund- und Mehrfachverglasung nach Anspruch 20, umfassend ein Material und mindestens zwei zusätzliche Substrate, die einem zweiten Substrat und einem dritten Substrat entsprechen, wobei das Material und das dritte Substrat durch mindestens eine Zwischenlage aus Gas getrennt sind, und
- das Material und das zweite Substrat oder
- das zweite Substrat und das dritte Substrat
durch mindestens eine Verbundzwischenlage getrennt sind.

27. Mehrfach- und/oder Verbundverglasung nach Anspruch 20 bis 26, **dadurch gekennzeichnet, dass** die absorbierende Beschichtung für eine Farbanpassung auf der Fläche 1 positioniert ist, und die funktionelle Beschichtung, die auf die Sonnenstrahlung und/oder die Infrarotstrahlung wirken kann, auf der Fläche 2 oder 3 positioniert ist.

## Claims

1. A material comprising one or more transparent substrates, each substrate comprising two main faces, **characterized in that**:
- one of the faces of one of the substrates is coated with a functional coating which can have an effect on solar radiation and/or infrared radiation comprising at least one silver-based metallic functional layer, each positioned between two dielectric coatings, and
- a face not coated with the functional coating of one of the substrates comprises an absorbent color-adjustment coating comprising, starting from the substrate:
- an absorbent layer which absorbs solar radiation in the visible part of the spectrum,
- an upper dielectric coating.

2. The material as claimed in claim 1, comprising a transparent substrate comprising two main faces, **characterized in that**:
- one of the faces of the substrate is coated with a functional coating which can have an effect on solar radiation and/or infrared radiation,
- the other face of the substrate is coated with an absorbent color-adjustment coating comprising an absorbent layer which absorbs solar radiation in the visible part of the spectrum.

3. The material as claimed in claim 1, comprising:
- a transparent substrate comprising two main faces, of which one of the faces of the substrate is coated with a functional coating which can have an effect on solar radiation and/or infrared radiation, and
- an additional substrate comprising at least two main faces,
**characterized in that**:
at least one face not coated with the functional coating of one of the substrates comprises an absorbent color-adjustment coating comprising an absorbent layer which absorbs solar radiation in the visible part of the spectrum,
said face is chosen from:
- the other uncoated face of the substrate coated with a functional coating,
- one of the faces of an additional substrate.

4. The material as claimed in any one of the preceding claims, **characterized in that** the absorbent layer is a layer made of a material having an n/k ratio such as defined in the specification between 0 and 5, excluding these values, over at least 60% of the wavelength range of the visible region (from 380 nm to 780 nm).

5. The material as claimed in any one of the preceding claims, **characterized in that** the light absorption due to the absorbent layer, measured on the glass side by depositing only this absorbent layer enclosed between two non-absorbent dielectric layers on ordinary clear glass of 4 mm to 6 mm thick, measured, is greater than 5%.

6. The material as claimed in any one of the preceding claims, **characterized in that** the absorbent layer is chosen from:
- layers based on one or more metals and/or metalloids,
- layers of nitride of one or more metals and/or metalloids,
- layers of oxynitride of one or more metals and/or metalloids,
of elements chosen from palladium, niobium, tungsten, iron, in particular stainless steel, titanium, chromium, molybdenum, zirconium, nickel, tantalum, zinc, tin and silicon.

7. The material as claimed in any one of the preceding claims, **characterized in that** the absorbent layer is chosen from a layer of nickel and/or chromium nitride, a layer of titanium nitride, a layer of niobium nitride or a layer based on silicon.

8. The material as claimed in any one of the preceding claims, **characterized in that** the absorbent layer has a thickness of between 0.1 and 20 nm.

9. The material as claimed in any one of the preceding claims, **characterized in that** the absorbent color-adjustment coating comprises a dielectric coating and an absorbent layer.

10. The material as claimed in any one of the preceding claims, **characterized in that** the absorbent color-adjustment coating comprises, starting from the substrate:
- a lower dielectric coating,
- an absorbent layer,
- an upper dielectric coating.

11. The material as claimed in any one of the preceding claims, **characterized in that** the absorbent color-adjustment coating comprises, starting from the substrate:
- a lower dielectric coating,
- an absorbent layer,
- an intermediate dielectric coating,
- an absorbent layer,
- an upper dielectric coating.

12. The material as claimed in either one of claims 10 and 11, **characterized in that** the lower dielectric coating comprises a high-index layer having a refractive index of greater than 1.85.

13. The material as claimed in claim 10 to 12, **characterized in that** the lower dielectric coating comprises a sequence of at least two dielectric layers, the variation in refractive index of which is greater than 0.2.

14. The material as claimed in any one of claims 10 to 13, **characterized in that** the lower dielectric coating comprises a sequence of at least two dielectric layers, including:
- a low-index layer having a refractive index of less than 1.75, and
- a high-index layer having a refractive index of greater than 1.85.

15. The material as claimed in any one of claims 10 to 13, **characterized in that** the upper or intermediate dielectric coating comprises a high-index layer having a refractive index of greater than 1.85 and/or a low-index layer having a refractive index of less than 1.75.

16. The material as claimed in any one of the preceding claims, **characterized in that** the functional coating comprises one or more metallic functional layers, each positioned between two dielectric coatings.

17. The material as claimed in any one of the preceding claims, **characterized in that** the substrate is made of glass, in particular soda-lime-silica glass, or of a polymeric organic substance.

18. The material as claimed in any one of the preceding claims, **characterized in that** the absorbent color-adjustment coating is positioned on face 1 and the functional coating which can have an effect on solar radiation and/or infrared radiation is positioned on face 2.

19. The material as claimed in any one of the preceding claims, **characterized in that** it comprises at least two color-adjustment coatings comprising an absorbent layer, each located on different faces of one of the substrates, excluding the face(s) coated with the functional coating.

20. A glazing comprising a material as claimed in any one of claims 1 to 19, **characterized in that** it is in the form of monolithic, laminated and/or multiple glazing.

21. The multiple glazing as claimed in claim 20, **characterized in that** when the material is fitted in a double glazing with the functional coating positioned on face 2, the double glazing has:
- a light transmission of between 40% and 60%,
- values of a* and b* in external reflection of, in increasing order of preference, between -5 and +5, between -4 and +4, between -3 and +3, between -2 and +2, between -1 and +1,
- values of a* and b* in internal reflection of, in increasing order of preference, between -5 and +5, between -4 and +4, between -3 and +3, between -2 and +2, between -1 and +1,
- values of a* and b* in transmission of, in increasing order of preference, between -5 and +5, between -4 and +4, between -3 and +3, between -2 and +2, between -1 and +1.

22. The multiple glazing as claimed in claim 20, **characterized in that** when the material is fitted in a double glazing with the functional coating positioned on face 2, the double glazing has:
- values of a* in external reflection of, in increasing order of preference, between -10 and - 3,
- values of b* in external reflection of, in increasing order of preference, between -20 and - 10.

23. The multiple glazing as claimed in claim 20, **characterized in that** when the material is fitted in a double glazing with the functional coating positioned on face 2, the double glazing has values of a* and b* in external reflection of, in increasing order of preference, between 5 and 20.

24. The multiple glazing as claimed in claim 20 to 23, comprising a material and at least one second substrate, the material and the additional substrate are separated by at least one intermediate gas-filled space.

25. The laminated glazing as claimed in claim 20, comprising a material and at least one additional substrate, the material and the additional substrate are separated by at least one lamination interlayer.

26. The laminated and multiple glazing as claimed in claim 20, comprising a material and at least two additional substrates corresponding to a second substrate and a third substrate, the material and the third substrate are separated by at least one intermediate gas-filled space, and
- the material and the second substrate or
- the second substrate and the third substrate,
are separated by at least one lamination interlayer.

27. The multiple and/or laminated glazing as claimed in claim 20 to 26, **characterized in that** the absorbent color-adjustment coating is positioned on face 1 and the functional coating which can have an effect on solar radiation and/or infrared radiation is positioned on face 2 or 3.
